Europäisches Patentamt

**European Patent Office**

**Office européen des brevets**

(11) Numéro de publication : **0 133 083**
**B1**

(12) **FASCICULE DE BREVET EUROPÉEN**

(45) Date de publication du fascicule du brevet :
**02.03.88**

(51) Int. Cl.⁴ : **D 04 H   1/70**

(21) Numéro de dépôt : **84401416.7**

(22) Date de dépôt : **04.07.84**

(54) **Formation de feutres à structure isotrope.**

(30) Priorité : **07.07.83 FR 8311344**

(43) Date de publication de la demande :
**13.02.85 Bulletin 85/07**

(45) Mention de la délivrance du brevet :
**02.03.88 Bulletin 88/09**

(84) Etats contractants désignés :
**AT BE CH DE FR GB IT LI LU NL SE**

(56) Documents cités :
**DE-A- 1 635 620**

(73) Titulaire : **ISOVER SAINT-GOBAIN**
**Les Miroirs 18, avenue d'Alsace**
**F-92400 Courbevoie (FR)**

(72) Inventeur : **Debouzie, Alain**
**37 rue Racine**
**F-76650 Petite Couronne (FR)**
Inventeur : **Bouquet, François**
**30 rue Edouard Vaillant**
**F-60290 Rantigny (FR)**
Inventeur : **de Meringo, Alain**
**155 boulevard Saint-Germain**
**F-75006 Paris (FR)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

## Description

L'invention est relative à la formation de feutres dont les fibres sont disposées suivant des directions aléatoires.

Plus particulièrement, l'invention est relative aux feutres formés à partir de fibres minérales et désignées sous les noms génériques de laine de verre, laine de roche, etc...

De façon traditionnelle, les feutres de fibres minérales sont constitués en continu en déposant sur un convoyeur les fibres qui sont véhiculées par des courants gazeux. Le convoyeur retient les fibres et laisse passer les gaz.

Avant qu'elles ne se déposent sur le convoyeur, les fibres sont enduites d'une composition résineuse destinée à lier les fibres entre elles donnant ainsi sa cohésion au feutre constitué. La composition résineuse appliquée sous forme liquide est réticulée par un traitement thermique effectué sur le feutre préalablement ramené aux conditions d'épaisseur et de masse volumique souhaitées.

Les modes traditionnels de formation des feutres aboutissant à des produits dont les propriétés ne répondent pas parfaitement à toutes les exigences demandées par certaines applications particulières. En plus des qualités isolantes requises de façon tout à fait générale, il est ainsi parfois nécessaire que les produits utilisés présentent des qualités mécaniques très spécifiques. C'est le cas par exemple des produits supportant des éléments de maçonnerie et qui doivent en conséquence résister à de fortes compressions tels que les éléments servant à l'isolation des toitures-terrasses accessibles à la circulation. C'est aussi le cas des produits utilisés en isolation par l'extérieur et qui notamment doivent pouvoir résister aux efforts à l'arrachement.

Pour obtenir des produits présentant ces propriétés particulières ainsi que d'autres que nous verrons dans la suite, il est nécessaire de modifier les procédés traditionnels de formation des feutres.

La formation des feutres par dépôt des fibres sur le convoyeur de réception ou sur un organe analogue conduit à un enchevêtrement qui n'est pas homogène dans toutes les directions. On constate expérimentalement que les fibres ont une forte tendance à se placer parallèlement à la surface de réception. Cette tendance est d'autant plus accentuée que les fibres sont plus longues.

Cette structure des feutres est favorable à leurs propriétés isolantes et aussi à leur résistance à la traction dans le sens longitudinal. Pour de nombreuses utilisations une telle structure est par conséquent avantageuse. Cependant, on comprend qu'une telle structure ne soit pas la mieux adaptée lorsque par exemple le produit doit résister à la compression ou à l'arrachement dans le sens de son épaisseur.

Pour améliorer la résistance à la compression de ces feutres, une solution consiste à accroître leur masse volumique en accroissant la masse de fibres par unité de surface sur l'organe de réception où se constitue le feutre. Outre que la masse de fibres par unité de surface que l'on peut déposer est limitée, l'accumulation des fibres sur l'organe de réception s'opposant rapidement au passage des gaz, et donc à la poursuite dans de bonnes conditions de la formation du feutre, ceci ne permet pas d'améliorer d'autres propriétés comme la résistance à l'arrachement.

Une autre solution proposée antérieurement consiste à faire en sorte que la direction des fibres se situe non plus dans le plan du feutre mais dans un plan perpendiculaire à celui-ci. Cette disposition est atteinte par exemple en formant des plis dans le feutre. Ces plis sont notamment obtenus soit en disposant le feutre en couches successives plus ou moins longues s'étendant dans le sens de l'épaisseur finale souhaitée, soit en comprimant le feutre longitudinalement. Sous l'effet de la compression dans les conditions envisagées le feutre forme des ondulations. Le traitement thermique de la composition du liant qui est effectué postérieurement, confère un caractère permanent à cette structure plissée.

La direction des fibres orientées dans le sens de l'épaisseur du feutre ainsi formé permet d'améliorer sensiblement la résistance à la compression et à l'arrachement. Cette structure est cependant désavantageuse pour ce qui concerne la résistance à la traction longitudinale — le feutre a tendance à se déplier — ou à la flexion.

La disposition des fibres dans l'épaisseur peut résulter aussi de l'assemblage de bandes de feutre dont la largeur correspond à l'épaisseur du feutre souhaité, chaque bande étant disposée de façon que les fibres soient dans des plans perpendiculaires aux faces du feutre constitué. Les bandes sont maintenues les unes contre les autres au moyen d'un revêtement ou d'un voile couvrant l'une ou les deux faces du feutre. Eventuellement, les bandes peuvent aussi être collées directement les unes aux autres par leurs surfaces en contact.

Les feutres produits selon cette technique relativement complexe, appelés « lamelles-nappes », sont utilisés principalement pour l'isolation de canalisations. Pour cette application la capacité de flexion et même d'enroulement du produit obtenu au lieu de constituer un désavantage est particulièrement recherchée.

Le mode de formation de feutres décrit dans le document DE-A-1 635 620 comprend une compression longitudinale et ne semble pas devoir faire apparaître des plis. Ceci n'est obtenu qu'en limitant considérablement le taux de compression longitudinale. Pour obtenir des feutres résistant à l'écrasement, il est alors nécessaire de partir d'un assemblage de fibres ayant une masse surfacique élevée ce qui n'est pas favorable notamment en ce qui concerne l'extraction des gaz véhiculant les fibres, une forte masse de fibres par unité de surface exigeant une énergie importante.

Un but de la présente invention est de fournir des feutres dans lesquels les propriétés mécaniques, notamment la résistance à la compression et à l'arrachement dans le sens de l'épaisseur du produit, soient améliorées sans entraîner les inconvénients rencontrés antérieurement, et par conséquent sans former des plis, ou d'assemblage de bandes de feutre et sans utiliser à l'origine une masse de fibres par unité de surface élevée.

Un autre but de l'invention est également de fournir des feutres aux propriétés mécaniques améliorées et dont les propriétés isolantes restent satisfaisantes.

Un autre but de l'invention est de fournir des feutres présentant les propriétés énoncées précédemment, pour des conditions de masse volumique aussi faibles que possible.

Pour aboutir à ces résultats, l'invention propose la fabrication de feutres isolants dans lesquels l'orientation des fibres est sinon isotrope au moins plus aléatoire. En effet, dans les techniques antérieures énoncées, la formation des plis ou l'assemblage des bandes de feutre pour l'essentiel ne modifient pas fondamentalement l'orientation des fibres dans l'épaisseur du feutre. Celles-ci s'orientent seulement suivant la direction des plis ou des bandes. Au contraire, selon l'invention, on s'efforce de faire en sorte que les fibres à l'intérieur même du feutre produit prennent des directions aussi variées que possible sans modifier de façon sensible l'orientation générale de la nappe de fibres.

L'invention vise une procédé formation en continu de feutres de fibres d'un matériau verrier dans lequel le feutre est constitué par dépôt, sur un organe de réception, de fibres véhiculées par un courant gazeux, l'organe de réception étant perméable aux gaz et retenant les fibres, une composition de liant étant appliquée sur les fibres dans leur cheminement vers l'organe de réception, le feutre ainsi forme entre sa formation sur l'organe de réception et son traitement thermique, éventuellement après compression dans son épaisseur étant soumis à une compression longitudinale puis traité thermiquement pour réticuler la composition de liant et fixer la structure du feutre, caractérisé en ce que le feutre est soumis a au moins deux opérations de compression longitudinale dont le taux, c'est-à-dire le rapport de masse de fibres par unité de surface après et avant les compressions, est limité à une valeur inférieure à celle pour laquelle des plis se formeraient qui affecteraient les faces du feutre.

La compression du feutre est obtenue par passage entre des séries de convoyeurs délimitant ses faces inférieures et supérieures, la compression longitudinale résultant du passage d'une paire de convoyeurs animée d'une certaine vitesse à une paire de convoyeurs de vitesse inférieure à la précédente.

La compression préalable dans le sens de l'épaisseur est habituellement nécessaire. A la sortie de la chambre de réception des fibres, en raison de la façon dont le feutre se constitue, on constate une grande inhomogénéité de masse volumique. Si la partie au contact du convoyeur est relativement tassée, les fibres qui se trouvent sur la face libre sont disposées en un assemblage très léger et irrégulier.

L'opération de compression dans le sens de l'épaisseur a donc pour but de faire en sorte que la masse volumique soit plus homogène quel que soit le point considéré dans l'épaisseur du feutre. Une bonne homogénéité est en effet une des conditions requises pour que le réarrangement des fibres qui résulte de la compression longitudinale, s'opère de façon satisfaisante.

Par ailleurs, la compression dans le sens de l'épaisseur contribue à la formation d'une couche superficielle de fibres plus dense, analogue à celle qui se forme sur l'autre face du feutre au contact du convoyeur de réception.

La présence de cette couche superficielle et le maintien du feutre sur ses deux faces pendant l'opération de compression longitudinale contribuent aussi au réarrangement des fibres à l'intérieur du feutre sans formation de plis.

Par ailleurs pour éviter la formation de plis, le tassement des fibres étant obtenu dans un espace restreint, on constate expérimentalement que la compression longitudinale, pour chaque opération distincte, doit être limitée.

Divers facteurs interviennent indépendamment dans la fixation de cette limite. Il faut tenir compte notamment de la masse volumique du feutre, de son épaisseur, qui d'une certaine façon déterminent la capacité du feutre à se déformer pour se replier sur lui-même. On comprend notamment qu'un feutre épais et de masse volumique élevée ait moins tendance à former des plis. Il faut aussi tenir compte de la nature des fibres qui constituent le feutre. Le réarrangement sans formation de plis est d'autant plus facile que les fibres sont plus courtes.

Nous verrons dans la suite des exemples typiques de feutres de fibres minérales et leur comportement dans ce type d'opération. Mais dès à présent pour les feutres utilisés ordinairement dans le domaine de l'isolation thermique et acoustique, nous pouvons estimer que pour éviter la formation de plis indésirables, le rapport de compression, autrement dit le rapport des masses par unité de surface après et avant chaque compression est avantageusement maintenu inférieur à 10, et de préférence est inférieur à 7.

Les taux de compression avantageux varient cependant beaucoup selon la qualité des fibres formant les feutres. Plus les fibres sont grosses, plus le taux de compression pour chaque opération est faible. Ainsi pour des fibres dont le diamètre moyen est sensiblement supérieur à 10 micromètres, le taux de compression pour chaque opération est de préférence inférieur à 5.

En opérant ainsi, les inventeurs ont constaté que les fibres initialement déposées en couches sensiblement parallèles aux faces du feutre se placent suivant des directions aléatoires à l'intérieur du feutre, tandis que les fibres au contact des convoyeurs restent sensiblement parallèles aux faces. Autrement dit, les boucles qui se forment dans le produit restent d'une dimension relativement faible par rapport à l'épaisseur du feutre et n'affectent pas les faces.

Les inventeurs ont constaté, de façon surprenante, que des taux de compression plus élevés peuvent être atteints lorsque la compression est effectuée en plusieurs étapes successives, notamment avec les feutres pour lesquels la compression sans formation de plis est la plus délicate à obtenir. Ils ont constaté aussi que pour un même taux de compression finale, les propriétés des produits obtenus peuvent être améliorées lorsque la compression est conduite en plusieurs étapes. L'invention concerne donc les modes de compression des feutres effectués en plusieurs étapes successives.

Les raisons des améliorations constatées dans le procédé en plusieurs étapes ne sont pas parfaitement élucidées. On peut faire l'hypothèse qu'en limitant la compression imposée à chacune de ces étapes, on favorise l'apparition de déformations localisées d'ampleur limitée et que les déformations ultérieures prennent naissance en des points différents des premiers, le résultat étant la multiplication des déformations alors qu'en une seule étape, les déformations peu nombreuses auraient tendance à affecter une fraction importante de l'épaisseur du feutre. Ceci ne constitue qu'une hypothèse. Cependant, l'examen des coupes de feutres semble bien confirmer ce mécanisme : les boucles dans le cas de l'invention sont petites et bien dispersées dans la masse du produit.

Les fibres sur les faces du produit constituent des couches pratiquement exemptes de boucles.

Bien entendu, même en multipliant le nombre des opérations de compression longitudinale, les taux de compression longitudinale que l'on peut atteindre ne sont pas illimités. Pour des raisons d'ordre pratique le taux de compression longitudinale global, c'est-à-dire pour l'ensemble des compressions longitudinales effectué sur un feutre, ne dépasse pas 15.

Dans la suite de la description, des détails sont donnés sur les conditions de production des feutres par le procédé selon l'invention de même que sur les feutres ainsi obtenus.

Il est fait référence aux planches de dessins dans lesquelles :

- la figure 1 représente schématiquement et en perspective une coupe d'un échantillon d'un feutre obtenu sans compression longitudinale,
- la figure 2 est une vue analogue à la précédente d'un échantillon de feutre comprimé selon les techniques antérieures,
- la figure 3 est une vue analogue aux précédentes d'un échantillon de feutre comprimé selon l'invention,
- la figure 4 est une vue schématique d'une ligne de production de feutre selon l'invention,
- la figure 5 est une vue agrandie et détaillée de la partie de la figure 4 dans laquelle s'effectue la compression du feutre,
- la figure 6 est un diagramme des résistances à la compression en fonction de la masse volumique et pour divers modes de production avec ou sans compression selon l'invention,
- la figure 7 est un diagramme montrant l'évolution de l'amélioration de la résistance à la compression en fonction de l'épaisseur du feutre.

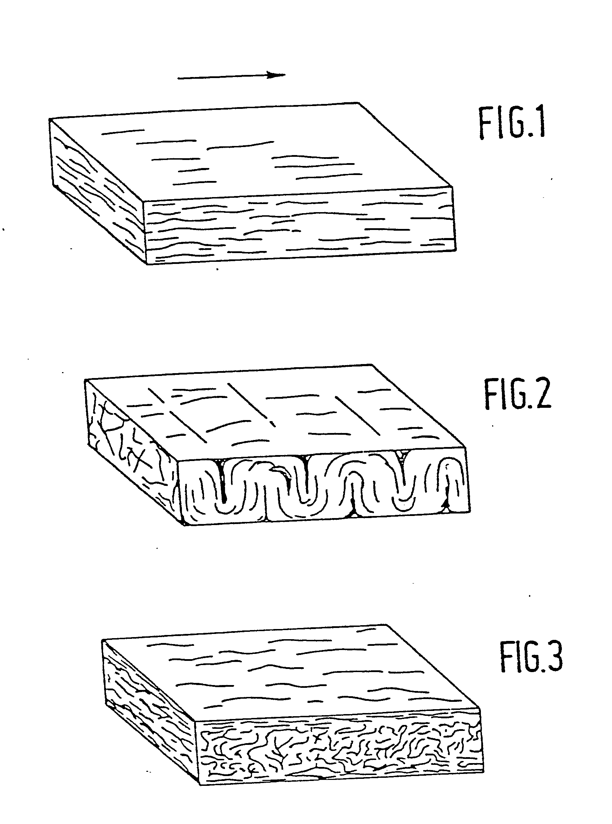

La position dominante des fibres dans un feutre qui n'a subi qu'une compression dans le sens de l'épaisseur est représentée à la figure 1. Une très grande majorité des fibres se dispose parallèlement aux faces du feutre ou suivant une position très voisine. La disposition des fibres est sensiblement la même que l'on considère le feutre dans le sens longitudinal, désigné par une flèche, ou dans le sens transversal (par rapport au convoyeur sur lequel le feutre est constitué).

Ce type de feutre offre une bonne résistance thermique mais se comprime ou s'arrache facilement dans le sens de l'épaisseur.

Les feutres plissés, tels que représentés à la figure 2, offrent une meilleure résistance à l'arrachement et à la compression dans la mesure où la présence des plis équivaut à dresser les fibres dans le sens de l'épaisseur du feutre. Ces plis profonds apparaissent sur les faces du feutre. Dans le sens transversal, la structure de la coupe transversale varie selon la position de celle-ci par rapport aux plis. Cette structure résiste mal à la flexion ou à la traction longitudinale.

Le feutre de la figure 3 représente ce qui est obtenu selon l'invention. Longitudinalement, on constate une grande diversité de direction des fibres au centre du produit et l'absence de plis en surface. Transversalement, de façon typique, la direction dominante reste parallèle aux faces du feutre.

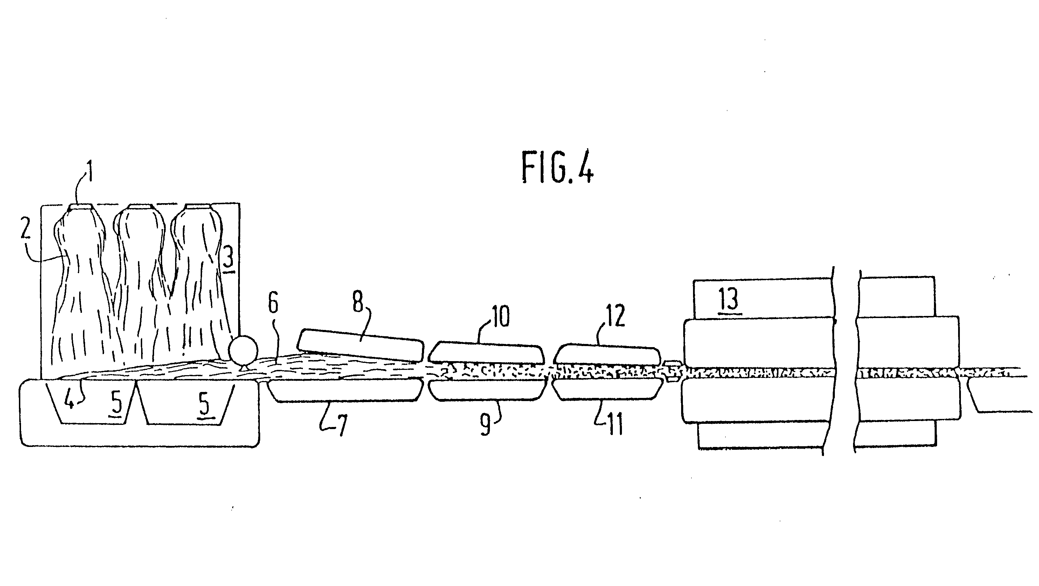

La figure 4 montre le schéma général d'une installation de formation de feutres. Ce schéma fait apparaître trois parties bien distinctes, celle dans laquelle le feutre est formé à partir des fibres, celle dans laquelle le feutre est compressé de la façon correspondant à l'invention et enfin la partie dans laquelle le feutre est traité thermiquement pour réticuler le liant.

L'installation de formation des fibres est représentée schématiquement par trois dispositifs de centrifugation 1. La mise en oeuvre de l'invention n'est liée à aucun mode de formation particulier. Le mode auquel il est fait référence est seulement celui qui au plan industriel est le plus largement utilisé pour la formation de fibres de verre, mais d'autres modes sont également très importants, notamment ceux utilisés habituellement pour la formation de laine de roche et qui font intervenir un ensemble de roues de centrifugation sur la paroi périphérique desquelles le matériau est amené pour être accéléré et projeté sous forme de fibres.

Trois dispositifs de centrifugation 1 sont montés en série. Dans les installations importantes, le nombre de centrifugeurs peut atteindre ou même dépasser la dizaine.

Les fibres produites par chacun des dispositifs de centrifugation 1 forment à l'origine un voile annulaire 2. Elles sont entraînées par les courants gazeux vers la partie inférieure de la chambre de réception 3 où se situe un convoyeur de réception 4 perméable aux gaz et retenant les fibres. La circulation des gaz est assurée par une aspiration entretenue sous le convoyeur de réception 4 à partir des caissons 5 en dépression par rapport à l'atmosphère de la chambre 3.

Les fibres se déposent sur le convoyeur en une épaisseur qui va en s'accroissant jusqu'à la sortie de la chambre de réception.

A l'intérieur de la chambre, des moyens non représentés projettent sur les fibres une composition liquide de liant. On s'efforce traditionnellement de faire en sorte que la distribution du liant sur la fibre soit aussi uniforme que possible pour qu'ensuite le liant soit réparti de façon bien homogène dans l'ensemble du feutre.

Le feutre 6 sortant de la chambre 3 est ordinairement relativement léger. Sa masse volumique moyenne est faible pour une épaisseur importante. Par ailleurs, en raison du mode de formation du feutre, les fibres sont principalement orientées suivant des directions parallèles au convoyeur 4. Par une succession de modifications ce feutre va être conduit à une masse volumique très sensiblement accrue et à une orientation des fibres différente.

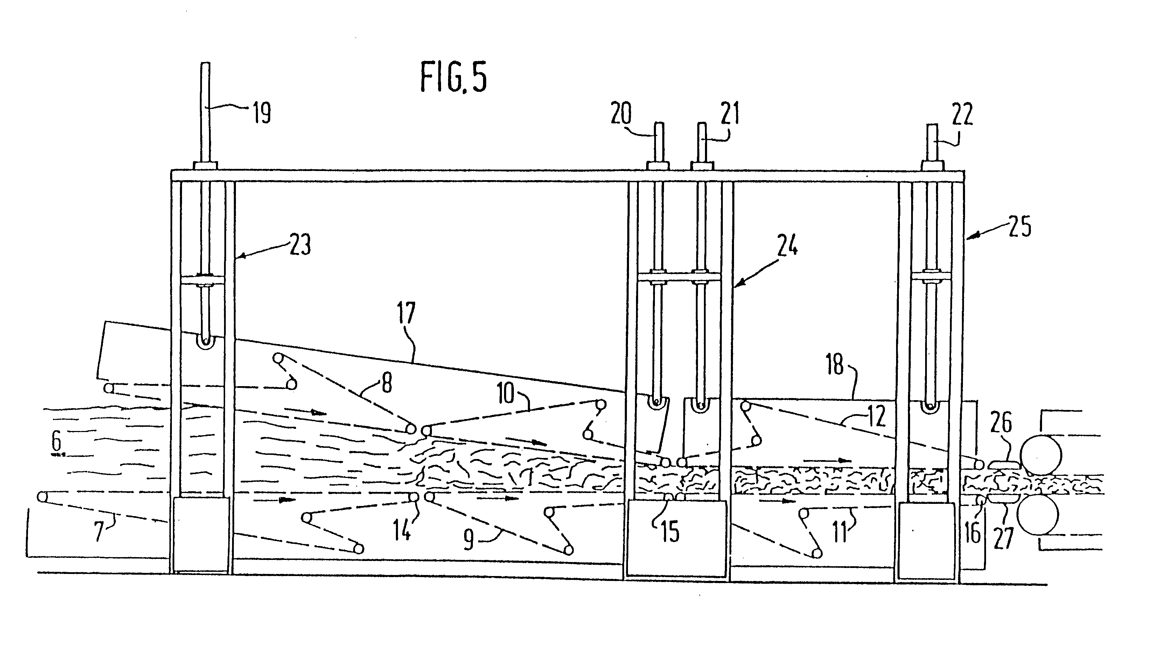

Ces modifications, selon l'invention, comprennent de préférence une compression du feutre dans le sens de l'épaisseur. Cette compression est obtenue par exemple comme montré sur la figure 4 et sur la figure 5 en faisant passer le feutre 6 entre deux convoyeurs 7 et 8, la distance séparant les deux convoyeurs allant en diminuant dans le sens de progression du feutre.

Le feutre ainsi comprimé passe ensuite entre des paires de convoyeurs 9, 10 et 11, 12, la vitesse de chaque paire étant inférieure à celle des paires de convoyeurs précédents, ce qui occasionne une compression longitudinale continue du feutre.

Pendant cette succession de modifications, le feutre est confiné en permanence pour éviter qu'il ne reprenne au moins une partie de son volume initial. Il est ensuite directement introduit dans l'étuve 13 où le traitement thermique assure la réticulation du liant et la stabilisation du produit.

A la sortie de l'étuve 13 le produit est encore découpé et conditionné en fonction des utilisations envisagées.

Le traitement du feutre suivant la technique selon l'invention est détaillé à la figure 5.

Cette figure représente de façon schématique le train des convoyeurs 7, 9 et 11 sur lesquels le feutre progresse jusqu'à son entrée dans l'étuve.

Les faces de ces convoyeurs portant le feutre sont de préférence dans un même plan.

Les treillis, mailles ou structures analogues constituant ces convoyeurs perméables aux gaz reposent sur des supports tels que des tôles ou des rouleaux, non représentés, qui assurent le maintien dans la position souhaitée.

La mise en mouvement des convoyeurs est réalisée par des roues motrices 14, 15, 16 de façon traditionnelle. L'entraînement des convoyeurs est exercé sans glissement, par exemple au moyen de chaînes solidaires de ceux-ci, afin de communiquer au feutre des vitesses bien définies. Les moteurs de chacun des convoyeurs sont indépendants les uns des autres de façon à permettre des réglages différents.

Faisant face aux convoyeurs 7, 9 et 11 se trouvent trois autres convoyeurs 8, 10 et 12. En général les vitesses des paires de convoyeurs (7, 8, 9, 10, 11, 12) sont réglées pour assurer une même progression des deux faces du feutre. Ceci implique lorsque, comme cela est représenté sur la figure, un ou plusieurs convoyeurs (8, 10) sont inclinés, que leurs vitesses soient légèrement supérieures à celles des convoyeurs correspondants (7, 9).

Le convoyeur 9 assure comme nous l'avons vu plus haut non seulement une compression dans l'épaisseur du produit mais une uniformisation de la masse volumique en tout point de cette épaisseur. Au contact du convoyeur 9 également, les fibres sont amenées à constituer la couche superficielle. Pour le convoyeur 8 on constate expérimentalement qu'une vitesse légèrement supérieure à celle qui correspond à la progression imposée par le convoyeur 7 peut favoriser la formation de cette couche superficielle et même d'une certaine façon favoriser le réarrangement des fibres à l'intérieur du feutre. L'excès de vitesse du convoyeur 8 doit cependant être limité pour ne pas compromettre la structure du feutre. De préférence lorsqu'on impose de telles conditions de marche, l'excès de vitesse du convoyeur supérieur 8 ne dépasse pas de préférence 10 %.

La hauteur des convoyeurs 8, 10 et 12 par rapport aux convoyeurs 7, 9 et 11 est réglable. A cet effet, l'ensemble des convoyeurs 8, 10 et 12, des rouleaux non représentés sur lesquels ils reposent et des moteurs correspondants qui les animent sont fixés sur des châssis schématisés en 17 et 18. Ces châssis 17 et 18 sont suspendus par des tiges de réglage 19, 20, 21, 22 à des arches 23, 24, 25 enjambant la ligne de formation des feutres.

Le réglage en hauteur des tiges 19, 20, 21, 22 est obtenu par des moyens traditionnels par exemple en utilisant des vérins à vis.

Dans la forme présentée, les deux convoyeurs 8 et 10 sont disposés sur un même châssis 17 et sont par conséquent réglés simultanément. Ceci ne constitue qu'une disposition possible. Dans le cas où il parait plus avantageux de régler séparément l'inclinaison et la hauteur des convoyeurs, il convient bien entendu de les disposer sur des châssis distincts réglables indépendamment l'un de l'autre, comme le sont les châssis 17 et 18.

Le réglage en hauteur des différents convoyeurs est fonction à la fois de l'épaisseur du feutre 6 sortant de la chambre de réception 3 et de l'épaisseur du feutre final tel qu'il doit être introduit dans l'étuve. En plus de ces considérations purement géométriques, le choix de la compression du feutre dans le sens de l'épaisseur est aussi dirigé par le comportement du feutre dans la phase de compression longitudinale. Nous avons déjà indiqué à ce propos que l'apparition des modifications de structure souhaitées dépendaient de la masse volumique du feutre, de l'épaisseur et de la longueur des fibres. Le réglage en hauteur des convoyeurs permet de fixer dans les meilleures conditions possibles, la masse volumique et l'épaisseur compte tenu de l'épaisseur initiale du feutre à traiter et de la nature des fibres qui le constituent.

Il est important de noter à ce propos que les conditions de masse volumique du feutre au moment de la compression longitudinale et dans le produit fini peuvent différer sensiblement. En pratique, en effet, les produits résistants à la compression les plus commercialisés sont des produits à relativement forte masse volumique pour des produits isolants. Elle s'établit d'ordinaire entre 30 et 150 $kg/m^3$. Pour aboutir à ces masses volumiques, on est habituellement conduit à effectuer une compression finale dans le sens de l'épaisseur lors de l'introduction dans l'étuve 13 de traitement du liant. En effet, si pour éviter la formation de plis lors de la compression longitudinale il est préférable d'avoir un feutre de masse volumique suffisante, cette même masse volumique ne doit pas non plus être trop élevée auquel cas le réarrangement des fibres serait également difficile et pourrait conduire à une détérioration partielle de la structure du feutre.

A titre indicatif, pour des feutres constitués à partir de fibres dont le diamètre moyen est de l'ordre de 6 à 14 micromètres et dont la longueur moyenne est de l'ordre de quelques centimètres, la compression initiale du feutre dans le sens de l'épaisseur est de préférence choisie de façon que le feutre comprimé ait une masse volumique de préférence supérieure à 10 $kg/m^3$.

Pour des feutres plus légers, le réarrangement des fibres risque d'être moins homogène et ceci d'autant plus que pour aboutir aux masses volumiques caractéristiques des produits recherchés pour résister à la compression ou à l'arrachement, les taux de compression longitudinale nécessaires devraient alors être très élevés.

De la même façon l'opération de compression est de préférence réalisée sur des feutres dont la masse volumique ne dépasse pas 60 $kg/m^3$.

Comme nous l'avons indiqué ci-dessus dans les conditions opératoires, la masse volumique du feutre avant compression longitudinale et le taux de compression que l'on impose dépendent au moins en partie l'un de l'autre. Plus la masse volumique est élevée plus faible est le taux de compression.

A ces conditions s'ajoute celle relative à l'épaisseur. On comprend que pour que les fibres puissent se réarranger comme il a été dit précédemment, une épaisseur minimum du feutre au moment de la compression longitudinale soit nécessaire. Pour les feutres dont il est question au paragraphe précédent, l'épaisseur avant la compression longitudinale n'est pas de préférence inférieure à 80 mm et avantageusement supérieure à 100 mm.

Les conditions de masse volumique et d'épaisseur peuvent aussi s'exprimer par la masse de fibres par unité de surface nécessaire. De façon simplifiée, on peut admettre que pour opérer dans de bonnes conditions, la quantité de fibres sur le convoyeur avant la compression longitudinale est de préférence supérieure à 0,75 $kg/m^2$.

Dans tous les cas il est préférable que la compression dans le sens de l'épaisseur soit effectuée de façon progressive pour éviter de détériorer les fibres. La longueur des convoyeurs 8 est choisie avantageusement de façon que l'inclinaison par rapport au plan défini par le convoyeur 7 ne soit pas supérieure à 20 %, et de préférence inférieure à 15 %.

Lorsque la compression dans le sens de l'épaisseur doit être relativement importante pour parvenir aux valeurs de masse volumique souhaitées, il peut être avantageux comme représenté à la figure 5 de poursuivre la compression commencée avec les convoyeurs 7 et 8, avec les convoyeurs 9 et 10 (que ceux-ci soient montés sur le même châssis ou non). On évite ainsi d'allonger la ligne de façon trop importante.

De même qu'il est préférable d'opérer la réduction d'épaisseur de façon progressive, il semble préférable que la compression longitudinale ne soit pas trop brutale. Il est aussi souhaitable d'obtenir une réduction progressive de la vitesse longitudinale ou au moins de répartir cette opération sur une série de réductions de vitesse de faible importance.

Des tentatives dans ce sens ont été faites en utilisant des séries de rouleaux dont la vitesse allait en décroissant. Il s'est avéré très difficile de maintenir ces rouleaux dans un état satisfaisant, des fibres venant s'insérer entre des rouleaux successifs et conduisant à un « bourrage » du dispositif.

Pour ces raisons, il est apparu plus avantageux d'opérer avec des convoyeurs ce qui permet d'éviter ce type de difficultés. Bien entendu s'il est possible de prévoir une série comprenant de nombreux convoyeurs successifs ayant des vitesses progressivement décroissantes, des considérations d'ordre pratique limitent le nombre de convoyeurs mis en oeuvre.

Compte tenu des compressions longitudinales utiles pour modifier la structure des feutres et des taux de compression admissibles sans former de plis en surface, en pratique on limite le nombre d'étapes de réduction de la vitesse du feutre à un petit nombre. Il est préférable d'opérer en deux étapes de compression, mais aussi plus de deux étapes pourraient être appropriées pour certains cas.

Sur la figure 5 le feutre 6, partiellement comprimé dans l'épaisseur au passage entre les convoyeurs 7 et 8, est introduit entre les convoyeurs 9 et 10 qui sont immédiatement dans le prolongement des précédents. La vitesse des convoyeurs 9 et 10 est inférieure à celle des convoyeurs 7 et 8. Le rapport de vitesse donne le taux de compression longitudinal.

Etant donné que la compression s'effectue au passage de la première paire de convoyeurs à la seconde, il est nécessaire de laisser le minimum d'intervalle entre ceux-ci de sorte que la fibre comprimée ne puisse pas s'échapper par cet intervalle. En pratique, un intervalle de quelques centimètres suffit pour que le mouvement des convoyeurs s'effectue sans risque de frottement et permet de maintenir la progression du feutre dans la direction voulue.

Eventuellement, de façon générale, des éléments formant glissières peuvent être disposés dans les intervalles entre les convoyeurs successifs pour assurer une bonne continuité dans le maintien du feutre. Ces éléments présentent une surface plane dans le prolongement des faces des deux convoyeurs entre lesquels l'élément est disposé.

Au passage entre les convoyeurs 9 et 10 le feutre qui a été comprimé longitudinalement une première fois continue d'être comprimé dans son épaisseur et une deuxième compression longitudinale est opérée en passant des convoyeurs 9 et 10 aux convoyeurs 11 et 12.

Les taux de compression longitudinale pour les deux compressions successives peuvent être égaux ou différents. En pratique, il est préférable que ces taux soient aussi voisins que possible afin de bien répartir les modifications introduites dans la structure du feutre, comme nous l'avons vu précédemment.

A la figure 5, les convoyeurs 11 et 12 sont disposés parallèlement l'un à l'autre. Autrement dit le feutre n'est pas davantage comprimé dans son épaisseur, et ceci même si ensuite une nouvelle compression est effectuée à l'entrée de l'étuve. A ce stade de la transformation du feutre, la masse volumique atteinte est en effet d'habitude relativement élevée et pour comprimer le feutre, il est nécessaire d'exercer une pression relativement importante ce qui est délicat avec les convoyeurs habituellement utilisés à ce stade du procédé. Au contraire, à l'entrée dans l'étuve le feutre passe entre deux rouleaux de grandes dimensions qui peuvent exercer sans difficulté une pression élevée. Néanmoins, il est préférable que la réduction d'épaisseur à l'entrée dans l'étuve ne soit pas trop importante sinon la compression qui en résulterait pourrait modifier de façon indésirable la structure du feutre établie par les compressions longitudinales. En pratique il est préférable que l'épaisseur à l'entrée dans l'étuve ne soit pas supérieure à deux fois celle du produit final.

La continuité dans le maintien du feutre entre les convoyeurs 11 et 12 et les convoyeurs de l'étuve peut être difficile à assurer sans intermédiaire pour des raisons d'ordre purement géométrique. Dans ce cas, il est également possible de prévoir des éléments fixes 26 et 27 formant glissière. Pour éviter le collage des fibres sur de tels éléments, il est avantageux de chauffer ceux-ci.

A titre d'exemple, des essais de traitement selon l'invention ont été effectués sur un dispositif tel que représenté à la figure 4, notamment pour améliorer la résistance à la compression de feutres d'isolation utilisés en terrasse.

La formation des fibres est réalisée par centrifugation à partir d'un centrifugeur dans lequel le matériau est conduit à l'état étirable. Des filaments sont formés par passage du matériau par des orifices situés à la périphérie du centrifugeur. Ces filaments pénètrent dans un courant gazeux chaud longeant la paroi du centrifugeur. Ils s'étirent sous l'effet de la centrifugation et sont projetés sur une paroi froide où ils se cassent. On obtient de cette façon des fibres relativement courtes de l'ordre de 1 à 3 cm de long en moyenne et de diamètre de l'ordre de 12 micromètres.

Les fibres formées par une série de 3 dispositifs de centrifugation sont collectées sur un tapis convoyeur après avoir été enduites d'une résine phénolique.

La masse de fibre par unité de surface dans la zone de formation du feutre varie selon les essais entre 1 et 3 kg/m².

Les produits préparés ont une épaisseur qui varie entre 30 et 120 mm et des masses volumiques variant entre 50 et 150 kg/m³.

Le but de ces essais est de produire des feutres isolants présentant notamment une résistance à la compression déterminée pour une masse volumique aussi faible que possible.

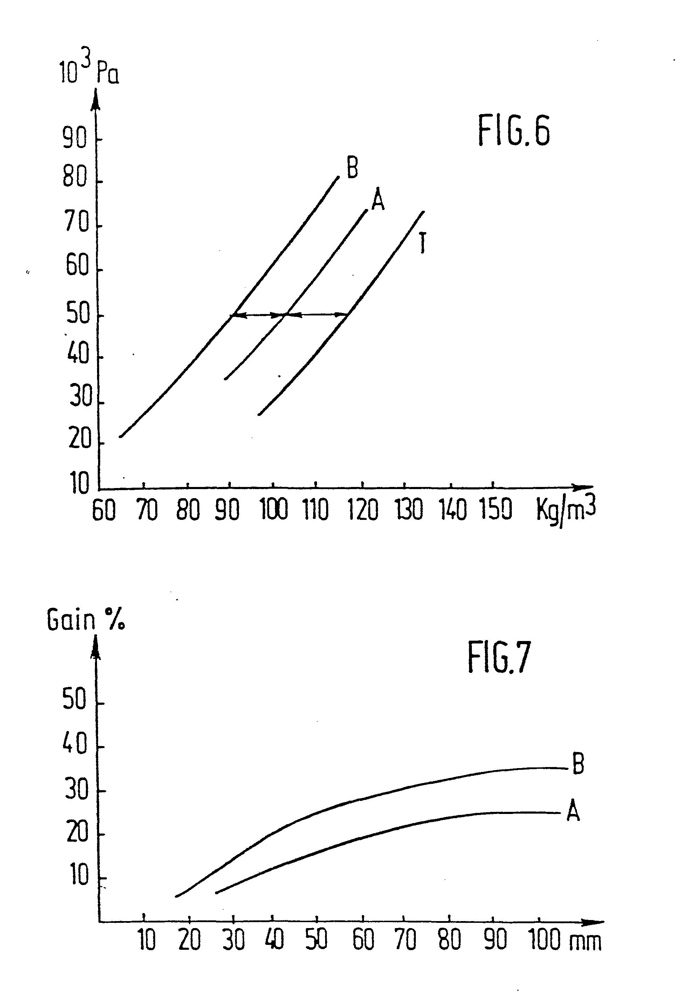

A la figure 6 sont représentés les résultats pour des produits préparés soit sans compression longitudinale (T), soit avec une compression longitudinale (A), soit après deux compressions longitudinales (B).

Les vitesses des différents convoyeurs utilisés varient de façon que le taux de compression longitudinal pour l'opération unique soit équivalent à celui correspondant aux deux opérations successives. Les produits comparés ont une même épaisseur de 50 mm.

La vitesse du convoyeur dans la partie de formation du feutre est de l'ordre de 35 m/min. Cette vitesse est également celle des convoyeurs tels que ceux représentés en 7 et 8 (cette dernière est légèrement supérieure comme nous l'avons indiqué pour compenser l'inclinaison par rapport à la direction de progression du feutre) à la figure 5. La vitesse dans l'étuve varie en fonction de la masse volumique des produits obtenus et se situe entre 7 et 10 m/min.

Dans la pratique, il est utile de conserver une vitesse du convoyeur de réception des fibres relativement importante pour limiter la masse des fibres par unité de surface sur le convoyeur de réception. Plusieurs avantages en découlent et en particulier le fait que la circulation des gaz à travers les fibres déposées en faible épaisseur est plus facile. L'aspiration qu'il faut maintenir sous le convoyeur de réception et par suite la dépense énergétique correspondante en sont réduites de façon très sensible. Dans ce sens, toute opération de compression longitudinale est favorable puisque pour une même masse volumique finale, la vitesse du convoyeur de réception peut être accrue.

Dans les deux cas considérés, les vitesses des convoyeurs intermédiaires 9 et 10 d'une part et 11 et 12 d'autre part, s'établissent de la façon suivante : pour une opération de compression simple, la vitesse des convoyeurs 9 et 10 est inchangée a 35 m/min, celle des convoyeurs 11 et 12 et de l'étuve est comprise entre 7 et 10 m/min ; pour une double compression la vitesse de 9 et 10 est comprise entre 18 et 23 m/min et celle de 11 et 12 entre 7 et 10 m/min.

La hauteur à l'introduction du feutre entre les convoyeurs 7 et 8 est réglée légèrement supérieure a celle du feutre. La distance séparant les convoyeurs 9 et 10 au point où ils sont le proches l'un de l'autre est deux fois l'épaisseur du produit final soit 100 mm. La même distance sépare les convoyeurs 11 et 12.

Les mesures de résistance à la compression sont effectuées selon la norme britannique BS 2972. Selon cette norme, un échantillon de 316 × 316 mm d'une épaisseur de 100 mm est soumis à une pression. On mesure la valeur de cette pression pour un taux de compression de 10 %. La vitesse de déplacement des plateaux de compression est de 1 mm/min.

La figure 6 sur laquelle les résultats sont reportés sous forme de graphique, montrent que pour une même résistance à la compression, l'échantillon obtenu sans compression longitudinale lors de la formation du feutre est celui qui requiert la masse volumique la plus importante. L'écart avec l'échantillon du feutre ayant subi une compression longitudinale est de l'ordre de 15 %, ce qui est considérable.

Il est encore plus remarquable de constater qu'un écart d'environ 10 % de masse volumique apparaît entre l'échantillon ayant subi une seule compression et celui ayant subi deux compressions longitudinales.

Les tests effectués sur les mêmes produits pour déterminer la résistance à l'arrachement sont de même nature. Les feutres ayant subi deux compressions sont très sensiblement meilleurs. Il faut noter que la compression longitudinale accroît de façon considérable cette résistance. L'accroissement peut atteindre et même dépasser 100 % par rapport aux valeurs des produits non traités selon l'invention, c'est-à-dire n'ayant pas subi de compression longitudinale.

Les gains de masse volumique que l'on constate en opérant selon l'invention sont fonction de l'épaisseur du produit. La figure 7 représente de façon synthétique pour une grande variété de produits, notamment des produits de masse volumique allant de 70 à 130 kg/m$^3$ la variation des gains en résistance à la compression pour un feutre préparé avec une (A) ou deux (B) compression longitudinales.

On constate sur ce graphique que l'amélioration croît avec l'épaisseur et devient très sensible dès que l'on dépasse 30 mm et atteint un écart maximum pour les épaisseurs supérieures à 50 mm.

Des essais analogues ont été reproduits avec des feutres préparés avec des fibres plus fines et plus longues (diamètre moyen 6 micromètres). Les mêmes caractéristiques ont pu être constatées.

Il apparaît également à la suite de ces essais que les améliorations apportées sont moins sensibles lorsque la masse volumique finale est très faible. Des améliorations avantageuses sont observées pour tous les feutres de fibres de verre (ou analogues) dont la masse volumique est supérieure à 50 kg/m$^3$.

Par ailleurs, en opérant dans les conditions prescrites pour l'invention on constate qu'il ne se forme pas de plis affectant toute l'épaisseur du feutre. Par suite la résistance à la flexion longitudinale des feutres obtenus reste dans le domaine des valeurs requises compte tenu des utilisations des produits envisagées.

**Revendications**

1. Procédé de formation en continu de feutres de fibres d'un matériau verrier dans lequel le feutre est constitué par dépôt, sur un organe de réception, de fibres véhiculées par un courant gazeux, l'organe de réception étant perméable aux gaz et retenant les fibres, une composition de liant étant appliquée sur les fibres dans leur cheminement vers l'organe de réception, le feutre ainsi formé entre sa formation sur l'organe de réception et son traitement thermique, éventuellement après compression dans son épaisseur étant soumis à une compression longitudinale puis traité thermiquement pour réticuler la composition de liant et fixer la structure du feutre, caractérisé en ce que le feutre est soumis à au moins deux opérations de compression longitudinale dont le taux, c'est-à-dire le rapport de masse de fibres par unité de surface après et avant les compressions, est limité à une valeur inférieure à celle pour laquelle des plis se formeraient qui affecteraient les faces du feutre.

2. Procédé selon la revendication 1, caractérisé en ce que le taux de compression longitudinale pour l'ensemble des opérations de compression longitudinale est inférieur à 15.

3. Procédé selon la revendication 2 dans lequel le taux de compression pour chaque opération de compression prise isolément n'est pas supérieur à 10.

4. Procédé selon l'une quelconque des revendications précédentes, caractérisé en ce que le feutre traité présente avant compression longitudinale une masse volumique supérieure à 10 kg/m$^3$.

5. Procédé selon l'une quelconque des revendications précédentes, caractérisé en ce que le feutre traité présente avant compression longitudinale une masse volumique qui n'est pas supérieure à 60 kg/m$^3$.

6. Procédé selon la revendication 4 ou la revendication 5, caractérisé en ce que le feutre avant compression longitudinale présente une masse par unité de surface qui n'est pas inférieure à 0,75 kg/m$^2$.

7. Procédé selon l'une des revendications précédentes, caractérisé en ce qu'il comprend deux opérations de compression longitudinales successives, les taux de compression pour ces deux opérations étant sensiblement identiques.

8. Procédé selon la revendication 7 dans lequel pour un feutre dont les fibres présentent un diamètre moyen supérieur à 10 micromètres le taux de compression longitudinale est maintenu inférieur à 5 pour chaque opération.

9. Procédé selon l'une des revendications précédentes, caractérisé en ce que postérieurement aux opérations de compression longitudinale une compression dans l'épaisseur est effectuée avant traitement thermique pour amener le feutre à une masse volumique comprise entre 30 et 200 kg/m³.

10. Dispositif pour la formation en continu de feutres de fibres d'un matériau verrier selon l'une quelconque des revendications précédentes, dans lequel les fibres portées par un courant gazeux sont disposées sur un convoyeur de réception (4) perméable aux gaz, ce dispositif comprenant deux paires de convoyeurs (7, 8 et 9, 10) dans le prolongement du convoyeur (4) ces convoyeurs étant animés de vitesses différentes pour assurer une compression longitudinale du feutre, ce dispositif comprenant aussi une étuve (13) pour le traitement thermique du feutre comprimé, caractérisé en ce qu'il comporte au moins trois paires de convoyeurs (7, 8, 9, 10, 11, 12) entre la zone de formation du feutre et celle de traitement thermique situées dans le prolongement les unes des autres, le feutre passant entre les convoyeurs de chacune des paires, la distance séparant les deux convoyeurs d'une même paire étant réglée de façon à maintenir le feutre sur ses deux faces, et la vitesse des paires de convoyeurs successifs étant réglée de façon qu'au passage d'une paire de convoyeurs a la suivante la vitesse du feutre soit réduite.

11. Dispositif selon la revendication 10 comprenant trois paires de convoyeurs, la première paire (7, 8) assurant simultanément une compression du feutre dans son épaisseur.

12. Dispositif selon la revendication 11 dans lequel la deuxième paire de convoyeurs (9, 10) assure aussi une compression du feutre dans son épaisseur.

13. Dispositif selon l'une des revendications 10 à 12 dans lequel pour maintenir le feutre comprimé lors de son entrée dans l'étuve (13) pour le traitement thermique, des glissières (26, 27) sont disposées dans le prolongement de la dernière paire de convoyeurs (11, 12).

**Claims**

1. Process for continuously forming felts made of fibres of a glass material in which the felt is formed by depositing on a reception unit of fibres conveyed by a gaseous stream, the reception unit being permeable to the gases and retaining the fibres, a binder composition being applied on the fibres in their movement towards the reception unit, the felt formed in this way between its formation on the reception unit and its heat treatment and where applicable after compression over its thickness being subjected to a longitudinal compression and then heat treated to interlace the composition of the binder and fix the structure of the felt, characterised in that the felt is subjected to at least two longitudinal compression operations, the ratio of which, i. e. the ratio of the mass of fibres per unit of surface area after and before the compressions is limited to a value of less than that at which folds would be formed which would affect the faces of the felt.

2. Process according to claim 1, characterised in that the longitudinal compression ratio for all the longitudinal compression operations is less than 15.

3. Process according to claim 2 in which the compression ratio for each compression operation taken in isolation is not greater than 10.

4. Process according to any one of the previous claims characterised in that the treated felt before longitudinal compression has a density of more than 10 kg/m³.

5. Process according to any one of the previous claims, characterised in that the treated felt before longitudinal compression has a density which is not greater than 60 kg/m³.

6. Process according to claim 4 or 5, characterised in that the felt before longitudinal compression has a mass per unit of surface area which is not less than 0.75 kg/m².

7. Process according to one of the previous claims, characterised in that it comprises two successive longitudinal compression operations, whereby the compression ratios for these two operations are substantially identical.

8. Process according to claim 7 in which for a felt the fibres of which have a mean diameter of more than 10 micrometres the longitudinal compression ratio is held at less than 5 for each operation.

9. Process according to one of the previous claims, characterised in that after the longitudinal compression operations a compression over the thickness is carried out before heat treatment to bring the felt to a density of between 30 and 200 kg/m³.

10. Device for the continuous formation of felts made of fibres of a glass material according to any one of the previous claims, in which the fibres carried by a gaseous stream are arranged on a reception conveyor (4) which is permeable to the gases, whereby this device comprises two pairs of conveyors (7, 8 and 9, 10) in the extension of the conveyor (4) and these conveyors are operated at different speeds to ensure a longitudinal compression of the felt whilst the device also includes an oven (13) for the heat treatment of the compressed felt, characterised in that it includes at least three pairs of conveyors (7, 8, 9, 10, 11, 12) between the zone for the formation of the felt and that of the heat treatment located in the extension of each other, whereby the felt passes between the conveyors of each of the pairs, the distance separating the two conveyors of the same pair is adjusted so as to maintain the felt on its two faces and the speed of the pairs of successive conveyors is adjusted so that with the changeover from one pair of conveyors to the following one the speed of the felt is reduced.

11. Device according to claim 10 including three pairs of conveyors, whereby the first pair (7, 8) effects simultaneously a compression of the felt over its thickness.

12. Device according to claim 11 in which the second pair of conveyors (9, 10) also effects a compression of the felt over its thickness.

13. Device according to one of claims 10 to 12 on which slides (26, 27) are arranged in the extension of the last pair of conveyors (11, 12) to keep the felt compressed when it enters the oven (13) for heat treatment.

**Patentansprüche**

1. Verfahren zur kontinuierlichen Herstellung von Faserfilz aus Mineralfasern bei dem der Filz durch Ablage von durch einen Gasstrom geförderten Fasern auf einem Aufnahmeorgan gebildet wird, wobei das Aufnahmeorgan für Gase durchlässig ist und die Fasern zurückhält, wobei eine Bindemittelzusammensetzung auf die Fasern auf ihrem Weg zu dem Aufnahmeorgan aufgebracht wird, wobei der so hergestellte Filz zwischen seiner Bildung auf dem Aufnahmeorgan und seiner Wärmebehandlung, gebenenfalls nach Komprimierung in seiner Dickenrichtung einer Längskomprimierung unterworfen und dann wärmebehandelt wird, um die Bindemittelzusammensetzung auszuhärten und die Filzstruktur zu fixieren, dadurch gekennzeichnet, daß der Filz wenigstens zwei Längskomprimierungsvorgängen unterworfen wird, deren Kompressionsgrad, d. h. das Verhältnis zwischen Fasermasse pro Flächeneinheit nach und vor den Komprimierungsvorgängen, auf einen Wert begrenzt wird, der geringer ist, als derjenige bei dem sich die Flächenausbildung des Filzes beeinflußende Falten bilden würden.

2. Verfahren nach Anspruch 1, dadurch gekennzeichnet, daß der Längskompressionsgrad aller Längskomprimierungsvorgänge zusammengenommen kleiner ist als 15.

3. Verfahren nach Anspruch 2, bei dem der Längskompressionsgrad jedes einzelnen Komprimierungsvorgangs nicht größer ist als 10.

4. Verfahren nach einem der vorhergehenden Ansprüche, dadurch gekennzeichnet, daß der behandelte Filz vor der Längskomprimierung eine Rohdichte aufweist, die größer ist als 10 kg/m³.

5. Verfahren nach einem der vorhergehenden Ansprüche, dadurch gekennzeichnet, daß der behandelte Filz vor der Längskomprimierung eine Rohdichte aufweist, die nicht größer ist als 60 kg/m³.

6. Verfahren nach Anspruch 4 oder Anspruch 5, dadurch gekennzeichnet, daß der Filz vor der Längskomprimierung eine Masse pro Flächeneinheit aufweist, die nicht kleiner ist als 0,75 kg/m².

7. Verfahren nach einem der vorhergehenden Ansprüche, dadurch gekennzeichnet, daß zwei aufeinanderfolgende Längskomprimierungsvorgänge vorgesehen sind, wobei der Längskomprimierungsgrad für beide Vorgänge im wesentlichen gleich ist.

8. Verfahren nach Anspruch 7, bei einem Filz, dessen Fasern einen mittleren Durchmesser von mehr als 10 μm aufweisen, wobei der Längskomprimierungsgrad für jeden Vorgang unterhalb von 5 gehalten wird.

9. Verfahren nach einem der vorhergehenden Ansprüche, dadurch gekennzeichnet, daß nach den Längskomprimierungsvorgängen eine Komprimierung in Dickenrichtung vor der Wärmebehandlung durchgeführt wird, um den Filz auf eine Rohdichte von zwischen 30 und 200 kg/m³ zu bringen.

10. Vorrichtung zur kontinuierlichen Herstellung von Faserfilzen aus Mineralfasern, nach einem der vorhergehenden Ansprüche, bei der die von einem Gasstrom beförderten Fasern auf einem gasdurchlässigen Förderer (4) abgelegt werden, wobei die Vorrichtung zwei Paare von Förderern (7, 8 und 9, 10) hinter dem Förderer (4) aufweist, wobei diese Förderer mit unterschiedlichen Geschwindigkeiten angetrieben werden, um eine Längskomprimierung des Filzes zu gewährleisten, wobei die Vorrichtung auch einen Tunnelofen (13) zur Wärmebehandlung des komprimierten Filzes aufweist, dadurch gekennzeichnet, daß wenigstens drei Paare von Förderern (7, 8, 9, 10, 11, 12) zwischen der Filzbildungszone und jener der Wärmebehandlung vorgesehen sind, die hintereinander angeordnet sind, wobei der Filz sich zwischen den Förderern eines jeden Paares vorbeibewegt, wobei der Abstand zwischen den beiden Förderern desselben Paares dergestalt geregelt wird, um den Filz auf seinen beiden Seiten zu halten, und wobei die Geschwindigkeit der aufeinander folgenden Paare von Förderern dergestalt geregelt wird, daß die Geschwindigkeit des sich hindurchbewegenden Filzes von einem Paar von Förderern zum nächsten verringert wird.

11. Vorrichtung nach Anspruch 10 mit drei Paaren von Förderern, wobei das erste Paar (7, 8) gleichzeitig eine Komprimierung des Filzes in seiner Dickenrichtung sicherstellt.

12. Vorrichtung nach Anspruch 11, bei der das zweite Paar von Förderern (9, 10) auch eine Komprimierung des Filzes in seiner Dickenrichtung gewährleistet.

13. Vorrichtung nach einem der Ansprüche 10 bis 12, bei der, um den Filz bei seinem Eintritt in den Tunnelofen (13) für dessen Wärmebehandlung komprimiert zu halten, Gleitschienen (26, 27) hinter dem letzten Paar von Förderern (11, 12) angeordnet sind.

FIG.1

FIG.2

FIG.3

# FIG.4

FIG.5

FIG.6

FIG.7